Europäisches Patentamt

European Patent Office

Office européen des brevets

(19)

(11) Veröffentlichungsnummer: **0 159 031**
A2

(12) # EUROPÄISCHE PATENTANMELDUNG

(21) Anmeldenummer: 85104667.2

(22) Anmeldetag: 17.04.85

(51) Int. Cl.⁴: **C 09 K 3/24**
**C 09 D 5/28**

(30) Priorität: 18.04.84 DE 3414586

(43) Veröffentlichungstag der Anmeldung:
23.10.85 Patentblatt 85/43

(84) Benannte Vertragsstaaten:
AT BE CH DE FR GB IT LI NL SE

(71) Anmelder: ECKART-WERKE
STANDARD-BRONZEPULVER-WERKE CARL ECKART
Kaiserstrasse 30
D-8510 Fürth/Bayern(DE)

(72) Erfinder: Rohrseitz, Gert, Dipl.-Betriebswirt
Steinweg 18
D-8502 Zirndorf(DE)

(74) Vertreter: LOUIS, PÖHLAU, LOHRENTZ & SEGETH
Kesslerplatz 1 P.B. 3055
D-8500 Nürnberg(DE)

(54) Zusammensetzung zur Erzeugung von künstlichem Schnee für Dekorzwecke.

(57) Mit der Erfindung wird eine Zusammensetzung zur Erzeugung von künstlichem Schnee für Dekorzwecke vorgeschlagen, der ein Luminophor zugesetzt ist, um im Dunklen besondere Lichtwirkungen zu erzielen.

EP 0 159 031 A2

Croydon Printing Company Ltd.

## Zusammensetzung zur Erzeugung von künst- lichem Schnee für Dekorzwecke

Künstlicher Schnee wird für Dekorationszwecke vielfältig eingesetzt, so z.B. um auf Fensterscheiben irgendwelche Ornamente vorübergehend aufzubringen. Ein bevorzugtes Anwendungsgebiet ist die Erzeugung von Weihnachtsmotiven durch Aufsprühen der Kunstschneezusammensetzung auf eine Glasunterlage. Die Zusammensetzung enthält einen vorzugsweise aus einer organischen fett- oder wachsartigen Substanz bestehenden Weissbildner (Schneebildner), der in einem vergleichsweise flüchtigen organischen Lösungsmittel aufgelöst ist, aus dem der Weissbildner beim Verdunsten des Lösungsmittels auskristallisiert. Die Handhabung einer solchen Zusammensetzung erfolgt meistens als Spray. Als Beispiele für den Weissbildner seien die höheren Fettalkohole, z.B. Cetylalkohol, und höheren Fettsäuren, z.B. Sterinsäure, für die Lösungsmittel Kohlenwasserstoffe einschl. chlorierter Verbindungen, Alkohole, Ester und Ketone genannt. Im allgemeinen ist der Sprühschneezusammensetzung noch eine höhermolekulare Substanz, z.B. ein Polyacrylat oder Polyvinylacetat (sog. Verfestiger) beigegeben, um eine gute Haftung des kristallinen Weissbelages auf der Unterlage zu vermitteln.

Es wurde als Nachteil empfunden, dass die mit einem künstlichen Schnee erstrebte Dekorwirkung im Dunklen verloren geht. Um diesen Nachteil abzustellen, hat sich die Erfindung zur Aufgabe gestellt, eine Zusammensetzung vorzuschlagen, mit der sich künstlicher (Dekor)Schnee herstellen lässt, von dem auch im Dunklen ein optischer Effekt ausgeht, ohne dass jedoch die Weisswirkung des künstlichen Schnees unter Tageslicht beeinträchtigt wird.

Zur Lösung dieser, soweit ersichtlich erstmals gestellten Aufgabe soll der vorerwähnten Zusammensetzung der Weissfarbe unter Tageslicht, bei Erregung im Dunklen sichtbares Licht emittiert. Für die Zwecke der Erfindung können sogenannte phosphoreszierende Luminophore verwendet werden, also Leuchtstoffe, die nach Erregung im Tageslicht noch im Dunklen nachleuchten. Als Beispiele hierfür seien genannt: Zink-, Cadmium-, Strontium- und Magnesiumsulfid mit Spuren von Kupfer und/oder Aluminium zur Aktivierung der Metallsufide, Wolframate und Molybdate vom Zink und Cadmium, gegebenenfalls mit Blei oder Samarium zur Aktivierung, Cadmiumsilikate und -phosphate mit Mangan. Als Luminophor für die erfindungsgemässe Zusammensetzung kommen aber auch selbstleuchtende Leuchtstoffe in Betracht, die ohne Bestrahlung von aussen durch beigefügte radioaktive Stoffe im Dunklen zur Aussendung von sichtbarem Licht angeregt werden.

Schliesslich kann in der erfindungsgemässen Zusammensetzung auch ein optisch fluoreszierender Leuchtstoff enthalten sein, der bei Bestrahlung mit Schwarzlicht, insbesondere UV-Licht, im Dunklen im sichtbaren Bereich Licht emittiert. Zu dieser Gruppe von Leuchtstoffen gehören vor allem fluoreszierende organische Stoffe, z.B. auf der Basis von Kon-ensationsverbindungen aus mehreren Benzolkernen.

Bei der Auswahl der erfindungsgemäss eingesetzten Luminophore ist darauf zu achten, dass sie die Voraussetzung erfüllen, in dem auf einer Unterlage erzeugten künstlichen Schnee keine im Tageslicht erkennbare Einfärbung hervorzurufen, so dass die (weisse) Schneefarbe erhalten bleibt.

Die Erscheinung der Lumineszenz und ihr Mechanismus ist hinlänglich bekannt und auch erklärt (vgl.z.B.Ullmanns Enzyklopädie der technischen Chemie unter "Leuchtstoffe"), so dass hierauf nicht im einzelnen eingegangen zu werden braucht. Entsprechendes gilt auch für die Beschreibung der lumineszensfähigen Stoffe (a.a.O.). Durch Auswahl der Luminophore einschliesslich ihrer Aktivatoren lassen sich vielfältige Farbemissionen erzielen.

Als Ausführungsbeispiel für eine erfindungsgemässe Zusammensetzung wird die nachfolgende Rezeptur angegeben:

1,5 Gew.% Polyvinylacetat (Bindemittel)
25 Gew.% Cetylalkohol und/oder Stearinsäure (Weissbildner)
50 Gew.% Methylenchlorid (Lösungsmittel)
23,5 Gew.% Zinksulfid mit Spuren von Kupfer (Luminophor).

0159031

ANSPRÜCHE:

1. Zusammensetzung für die Erzeugung von künstlichem Schnee für Dekorzwecke, d a d u r c h   g e k e n n z e i c h n e t , dass sie einen Luminophor enthält, der, ohne Beeinträchtigung der Weissfarbe unter Tageslicht, bei Erregung im Dunklen sichtbares Licht emittiert.

2. Zusammensetzung nach Anspruch 1, dadurch gekennzeichnet, dass der Luminophor ein phosphoreszierender Stoff ist.

3. Zusammensetzung nach Anspruch 1, dadurch gekennzeichnet, dass der Luminophor ein bei Bestrahlung mit Schwarzlicht, insbesondere UV-Licht, fluoreszierender Stoff ist.